(19) Europäisches Patentamt
European Patent Office
Office européen des brevets

(11) Veröffentlichungsnummer: **0 127 877**
**B1**

(12) # EUROPÄISCHE PATENTSCHRIFT

(45) Veröffentlichungstag der Patentschrift: **29.06.88**

(51) Int. Cl.⁴: **C 07 F 9/32**

(21) Anmeldenummer: **84106149.2**

(22) Anmeldetag: **30.05.84**

(54) **Verfahren zur Herstellung von phosphorhaltigen Cyanhydrinderivaten.**

(30) Priorität: **01.06.83 DE 3319850**

(43) Veröffentlichungstag der Anmeldung: **12.12.84 Patentblatt 84/50**

(45) Bekanntmachung des Hinweises auf die Patenterteilung: **29.06.88 Patentblatt 88/26**

(84) Benannte Vertragsstaaten: **AT BE CH DE FR GB IT LI NL SE**

(56) Entgegenhaltungen:
**EP-A-0 011 245**
**US-A-4 185 031**

(73) Patentinhaber: **HOECHST AKTIENGESELLSCHAFT, Postfach 80 03 20, D-6230 Frankfurt am Main 80 (DE)**

(72) Erfinder: **Lachhein, Stephen, Dr., Max- Planck- Strasse 1, D-6082 Mörfelden- Walldorf (DE)**
Erfinder: **Mildenberger, Hilmar, Dr., Fasanenstrasse 24, D-6233 Kelkheim (Taunus) (DE)**

**EP 0 127 877 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Gegenstand der vorliegenden Erfindung ist ein Verfahren zur Herstellung von Cyanhydrinen der Formel I, worin

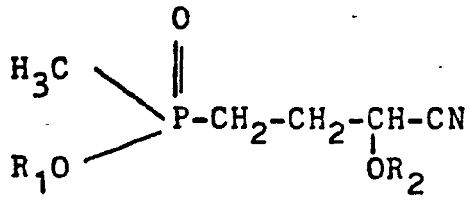 (I)

$R_1$ = $(C_1\text{-}C_6)$Alkyl und
$R_2$ = Wasserstoff, Acetyl oder Propionyl bedeuten.

Verbindungen der Formel (I) dienen als Zwischenstufen bei der Herstellung von Phosphinothricin (PTC) einem

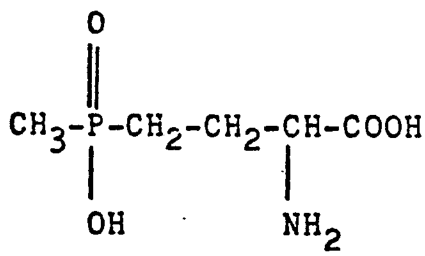 (PTC)

Herbizid mit ausgezeichneten totalherbiziden Eigenschaften (Europäische Patentanmeldung EP 00 11 245 A1).

Gemäß dieser europäischen Patentanmeldung ist auch bereits ein Verfahren zur Herstellung der Verbindungen der Formel bekannt, nach welchem Methanphosphonigsäureester der Formel II unter radikalischer Katalyse an acylierte Acroleincyanhydrin-Verbindungen der Formel (III) angelagert werden.

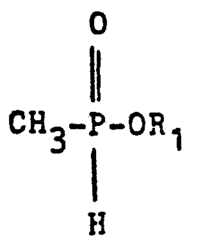 (II) 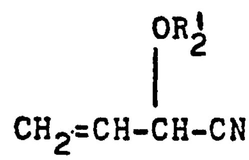 (III)

($R_1$ = $(C_1\text{-}C_6)$Alkyl) ($R'_2$ = Acetyl oder Propionyl)

Als Radikalstarter werden hierbei diverse Peroxide, Persäureester, Hydroperoxide sowie Azoisobutyronitril vorgeschlagen, insbesondere t-Butylperoctanoat, t-Butylperbenzoat und t-Butylpernonanoat. Das Verfahren wird bevorzugt zwischen 100° und 180°C durchgeführt. Die Ausbeuten betragen 84-98 % d.Th. bezogen auf Komponente (III). Das Verfahren hat den Nachteil, daß die Reinheiten der Produkte nicht befriedigen und daß die Ausbeuten bezogen auf (II) nicht ausreichen. Nachteilig ist weiter, daß überschüssiger Methanphosphonigester (II) Verunreinigungsprodukte enthält, die nur nach aufwendigen Methoden wieder zu entfernen sind.

Die Ausbeuten bezogen auf (II) liegen bei dem bekannten Verfahren deshalb so niedrig, weil der Phosphonigester (II) Disproportionierungsreaktionen eingeht, die zu Ausbeuteverminderung an zurückgewonnenem Phosphonigester (II), Verminderung der Reinheit von (I) und zu einer starken Abgasbelastung durch die dabei freigesetzten Phosphine führt (K. Sasse in Houben-Weyl: Methoden der org. Chemie XII/1, S. 64 ff, Thieme Verlag, Stuttgart 1963).

Diese Nachteile werden durch vorliegende Erfindung behoben. Gegenstand der vorliegenden Erfindung ist ein Verfahren zur Herstellung von Verbindungen der obengenannten Formel I durch Addition von Verbindungen der obengenannten Formel II an Verbindungen der obengenannten Formel III in Gegenwart von Radikalbildnern, dadurch gekennzeichnet, daß man als Radikalbildner Verbindungen der allgemeinen Formel IV, worin

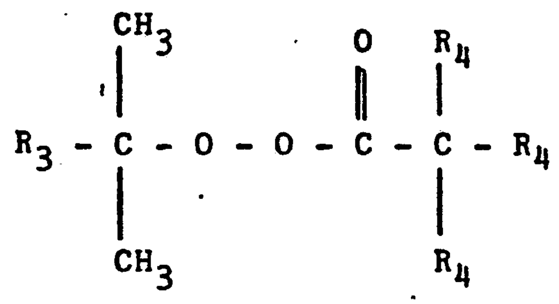 (IV)

$R_3$ = ($C_1$-$C_2$) Alkyl oder Phenyl und
$R_4$ = ($C_1$-$C_{10}$) Alkyl, insbesondere ($C_1$-$C_6$)Alkyl,
bedeuten, wobei die Reste $R_4$ gleich oder verschieden sein können, verwendet und die Reaktion bei Temperaturen im Bereich von 65 bis 100°C durchführt, und zur Herstellung von Verbindungen mit $R_2$=H anschließend den Rest $R_2'$ abspaltet.

Prinzipiell können zur Herstellung von Verbindungen der Formel I mit $R_2$ = H für $R'_2$ in Formel III auch andere Reste von Schutzgruppen wie der Trimethylsilylrest, die Methoxy- oder Äthoxycarbonylgruppe eingesetzt werden, die dann in gleicher Weise abgespaltet werden.

Die Radikalstartersubstanzen zeichnen sich dadurch aus, daß sie bei niedrigen Temperaturen in tertiäre Alkyl-Radikale zerfallen, die im beanspruchten Temperaturbereich eine große Reaktivität und eine hohe Selektivität bei den Wasserstoffübertragungsreaktionen im Konkurrenzsystem Phosphonigsäureester(II)/Acroleincyanhydrinacetat(III) besitzen.

Derartige Radikalbildner werden in der europäischen Patentanmeldung Nr. 11 245 nicht erwähnt. Es war nicht zu erwarten, daß gerade die erfindungsgemäß einzusetzenden Radikalbildner der Formel (IV) sich durch hohe Selektivität auszeichnen. Grundsätzlich ist als Nebenreaktion ein Angriff des aus dem Radikalbildner generierten Radikals auf die Verbindungen der Formel (III) unter Bildung von Allylradikalen möglich, welche die Radikalkettenreaktion inhibieren würden. (s. z. B. Vollmert, Grundriß der Makromolekularen Chemie, S. 58, Springer Verlag, 1962).

Dialkylperoxide, Dialkylperoxydicarbonate oder Azoisobutyronitril, welche niedrige Dissoziationsenergien besitzen, so daß sie aus diesem Grunde im beanspruchten Temperaturbereich einsetzbar sein sollten, sind für das vorliegende Verfahren ungeeignet bzw. führen zu unbefriedigenden Ausbeuten.

Da die Radikalbildner der Formel (IV) vorteilhaft bei niedrigen Reaktionstemperaturen zwischen 50° und 100°C eingesetzt werden können, werden Disproportionierungsreaktionen der Phosphorkomponente II unterdrückt. Hierdurch werden die Ausbeuten bezüglich der Komponente II und die Reinheit des Produkts der Formel (I) im Vergleich zum bekannten Verfahren beträchtlich erhöht.

Die Ausbeuten nach dem erfindungsgemäßen Verfahren betragen bezüglich der Komponente III 95 bis 99 % und bezüglich der Komponente II 89 - 95 %. Die Reinheiten der Produkte I betragen 92 bis 95 %. Die aus der Reaktionslösung abdestillierte Ausgangsverbindung (II) kann ohne Reinigung für eine neue Reaktion wieder verwendet werden.

Bevorzugt werden als Radikalbildner der Formel IV folgende Verbindungen eingesetzt: tert.-Butylperpivalat, tert.-Amylperpivalat, tert.-Butylperneodecanoat, tert.-Amylperneodecanoat und Cumylperneodecanoat. Die genannten Perneodecanoate (Produkte der Firma Peroxid-Chemie GmbH) liegen als Gemische der folgenden Formel (IV') vor:

(IV') 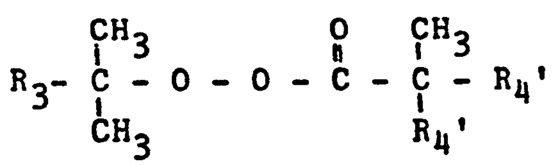

wobei $R_3$ die obengenannte Bedeutung besitzt und die beiden Reste $R_4'$ jeweils ($C_1$-$C_6$) Alkyl bedeuten mit der Bedingung, daß die Zahl der C-Atome beider Reste zusammen =7 ergibt.

Die Reaktion wird bevorzugt im Temperaturbereich zwischen 65° und 95°C, insbesondere bevorzugt zwischen 70° und 85°C durchgeführt. Das Verfahren wird zweckmäßigerweise in einer Inertatmosphäre beispielsweise unter Verwendung des Schutzgases Stickstoff oder Argon durchgeführt. Es ist ferner möglich, wenn auch nicht erforderlich, unter vermindertem Druck zu arbeiten.

In besonderer Ausgestaltung der Erfindung wird das Verfahren vorteilhaft so durchgeführt, daß man ein Teil des Radikalbildners der Formel (IV) oder stattdessen ein entsprechendes Teiläquivalent eines in der Europäischen Patentanmeldung Nr. 11 245 genannten Radikalstarters vor der Reaktion mit der Komponente II mischt und anschließend die Komponente III zusammen mit der Restmenge des Radikalbildners IV hinzufügt.

Die Abspaltung des Restes $R_2'$ zur Herstellung der Verbindungen der Formel I mit $R_2$ = H erfolgt in saurem Medium nach bekannten Methoden (Mc Omie, "Protective Groups in Organic Chemistry", Plenum Press, London 1973).

Nachfolgende Beispiele dienen zur Erläuterung der Erfindung.

**Beispiel 1**

Herstellung von (3-Acetoxy-3-cyanopropyl)-methyl-phosphinsäure-n-pentylester

242,0 g Methanphosphonigsäure-n-pentylester werden unter Stickstoff auf 80°C erwärmt und mit 0,5 g tert.-Butylperpivalat versetzt. Zu dieser Lösung werden innerhalb von 2,25 Stunden 63,9 g Acroleincyanhydrinacetat auf 2,5 g tert.-Butylperpivalat getropft. Nach beendeter Reaktion wird für 5 min. nachgerührt und 161,5 g Methanphosphonigsäure-n-pentylester abdestilliert. (Reinheit: 91,2 %, Rückgewinnung: 93,4 %). Es verbleiben 142,1 g (3-Acetoxy-3-cyanopropyl)-methyl-phosphinsäure-n-pentylester (Reinheit 94 %; Ausbeute 97 %).

**Beispiel 2**

Herstellung von (3-Acetoxy-3-cyanopropyl)-methyl-phosphinsäure-isobutylester

a) 215,2 g Methanphosphonigsäureisobutylester werden in einem mit Stickstoff gespülten Kolben auf 80°C erwärmt. In diese Lösung werden 0,5 g tert.-Butylperpivalat gegeben und unter starkem Rühren bei 80°C innerhalb von 2 Stunden 63,9 g Acroleincyanhydrinacetat zugetropft, das 2,5 g tert.-Butylperpivalat enthält. Nach beendetem Zutropfen wird 5 min bei 80°C gerührt und anschließend der überschüssige Methanphosphonigsäureisobutylester im Hochvakuum entfernt. Nach Dünnschichtdestillation im Hochvakuum erhält man 134,8 g (3-Acetoxy-3-cyanopropyl)-methylphosphinsäureisobutylester mit einer Reinheit von 93,9 %, entsprechend einer Ausbeute von 97 %. Man gewinnt 142,2 g Methanphosphonigsäureisobutylester mit einer Reinheit von 96,3 %, entsprechend einer Ausbeute von 91,6 % zurück.

b) Man erwärmt 215,2 g Methanphosphonigsäureisobutylester in einem mit Stickstoff gespülten Kolben auf 76°C und gibt 0,5 g tert.-Butylperpivalat hinzu und tropft innerhalb von 2,5 Stunden 63,9 g Acroleincyanhydrinacetat, worin 2,6 g tert.-Amylperpivalat gelöst sind, unter starkem Rühren bei 76°C zu. Nach beendeter Reaktion wird 5 Minuten bei 76°C nachgerührt. Der überschüssige Methanphosphonigsäureisobutylester wird im Hochvakuum entfernt. Man erhält 134,8 g (3-Acetoxy-3-cyanopropyl)methylphosphinsäureisobutylester (Reinheit = 93 %; Ausbeute = 96 %). Es werden 142,9 g Methanphosphonigsäureisobutylester mit einer Ausbeute von 92 % zurückgewonnen.

c) Es werden 215,2 g Methanphosphonigsäureisobutylester unter Stickstoff auf 72°C erwärmt und mit 0,5 g tert.-Amylperpivalat versetzt. Zu dieser Lösung werden innerhalb von 2,5 Stunden 63,9 g Acroleincyanhydrinacetat, indem 3,6 g tert.-Butylperneodecanoat gelöst sind, bei 72°C zugetropft. Nach beendeter Zugabe wird für 5 min. bei 72°C nachgerührt und 141,2 g Methanphosphonigsäureisobutylester im Hochvakuum abdestilliert (Rückgewinnung: 91 %). Es verbleiben 137,9 g 93,6 %-iger (3-Acetoxy-3-cyanopropyl)-methylphosphinsäure-isobutylester, entsprechend einer Ausbeute von 98,9 %.

d) 216,0 g Methanphosphonigsäureisobutylester werden in einem mit Stickstoff gespülten Kolben auf 85°C erwärmt. Innerhalb von 2,75 Stunden werden 63,9 g Acroleincyanhydrinacetat, worin 2,5 g tert.-Butylperpivalat gelöst sind, zugetropft. Es wird für 5 min nachgerührt und 140,4 g Methanphosphonigsäureisobutylester abdestilliert (Rückgewinnung: 92,5 %).
Es verbleiben 137,1 g (3-Acetoxy-3-cyanopropyl)-methylphosphinsäureisobutylester (Ausbeute 97 %; Reinheit 92 %).

e) 208 g Methanphosphonigsäureisobutylester werden unter Stickstoff auf 80°C erwärmt. In die heiße Reaktionslösung werden 0,5 g tert.-Butylperpivalat gegeben und innerhalb 2,3 Stunden 63,9 g Acroleincyanhydrinacetat und 2,5 g tert.-Butylperpivalat zugetropft. Es werden 5 min. bei 80°C nachgerührt und im Hochvakuum 133,9 g Methanphosphonigsäureisobutylester abdestilliert (Rückgewinnung: 91,3 %; Reinheit: 97 %). Man erhält 134,6 g (3-Acetoxy-3-cyanopropyl)-methyl-phosphinsäure-isobutylester (Ausbeute: 97,8 %; Reinheit 95 %).

f) 215,2 g Methanphosphonigsäureisobutylester werden unter Stickstoff auf 70°C erwärmt und mit 0,5 g tert.-Butylperpivalat versetzt. Innerhalb von 2,5 Stunden werden 63,9 g Acroleincyanhydrinacetat und 4,5 g Cumylperneodecanoat zugetropft. Nach beendeter Reaktion wird für 5 min. nachgerührt und der überschüssige Methanphosphonigsäureisobutylester abdestilliert. Es werden 141,0 g Methanphosphonigsäureisobutylester erhalten (Rückgewinnung: 91,8 %),.
Es verbleiben 136,1 g (3-Acetoxy-3-cyanopropyl)-methylphosphinsäureisobutylester (Ausbeute 98 %; Reinheit 94 %).

**Beispiel 3**

Herstellung von (3-Acetoxy-3-cyanopropyl)-methyl-phosphinsäureisopentylester

a) Es werden 235,0 g Methanphosphonigsäure-isopentylester unter Stickstoff auf 72°C erwärmt. Zu dieser Lösung werden 0,5 g tert.-Amylperpivalat gegeben und unter starkem Rühren bei 72°C innerhalb von 2,75 Stunden 63,9 g Acroleincyanhydrinacetat zugetropft, indem 3,6 g tert.-Butylperneodecanoat gelöst sind. Nach beendeter Reaktion wird für 5 min. bei 72°C nachgerührt und 154,8 g Methanphosphonigsäureisopentylester abdestilliert. (Rückgewinnung: 94,8 %). Man erhält 143,8 g 93,6 %-igen (3-Acetoxy-3-cyanopropyl)-methyl-phosphinsäureisopentyl-ester (Ausbeute = 97,9 %).

b) 235,0 g Methanphosphonigsäureisopentylester werden unter Stickstoff auf 80°C erwärmt und mit 0,5 g tert.-Butylperpivalat versetzt. Innerhalb von 3 Stunden werden 63,9 g Acroleincyanhydrinacetat und 2,5 g tert.-Butylperpivalat unter starkem Rühren bei 80°C zugetropft. Nach beendeter Reaktion werden 155,2 g 97,7 %-iger Methanphosphonigsäureisopentylester im Hochvakuum abdestilliert. (Rückgewinnung: 95 %). Es werden 141,8 g (3-Acetoxy-3-cyanopropyl)-methylphosphinsäureisopentylester erhalten (Ausbeute = 96,5 %; Reinheit = 93,6 %).

**Vergleichsbeispiel I**

Herstellung von (3-Acetoxy-3-cyanopropyl)-methylphosphinsäureisobutylester unter Verwendung von Di-n-butylperoxydicarbonat als Radikalstarter

208 g Methanphosphonigsäureisobutylester werden unter Stickstoff auf 75°C erwärmt und mit 0,5 g tert.-Butylperpivalat versetzt. Innerhalb von 2,5 Stunden werden 63,9 g Acroleincyanhydrinacetat, worin 2,3 g Di-n-butylperoxydicarbonat gelöst sind, zugetropft. Es werden 5 min. nachgerührt und der überschüssige Methanphosphonigsäureisobutylester abdestilliert. Es verbleiben 79,2 g (3-Acetoxy-3-cyanopropyl)-methylphosphinsäureisobutylester, entsprechend einer Ausbeute von 59,5 %.

**Vergleichsbeispiel II**

Herstellung von (3-Acetoxy-3-cyanopropyl)-methyl-phosphinsäure-isobutylester gemäß EP-A-11 245

210,5 g Methanphosphonigsäureisobutylester werden in einem gut mit Stickstoff gespülten Kolben auf 115°C erwärmt und dieser Lösung werden bei 115°C innerhalb von 2,5 Stunden 63,9 g Acroleincyanhydrinacetat zugetropft, das 2,5 g tert.-Butylperoctanoat enthält. Nach beendetem Zutropfen wird für 5 Min. bei 115°C nachgerührt und anschließend der überschüssige Methanphosphonigsäureisobutylester, abdestilliert. Man erhält 134,8 g (3-Acetoxy-3-cyanopropyl)-methylphosphinsäure-isobutylester, der 86,5 %-ig ist, entsprechend einer Ausbeute von 89,4 % d.Th.. Man gewinnt 118,9 g Methanphosphonigsäureisobutylester zurück, entsprechend einer Ausbeute von 79,4 % d. Th..

**Patentansprüche**

1. Verfahren zur Herstellung von Verbindungen der Formel (I),

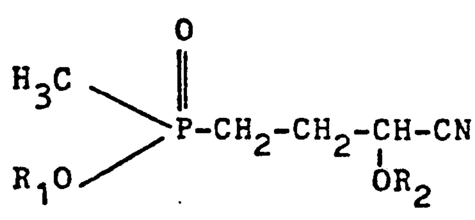

(I)

worin
$R_1$ = $(C_1\text{-}C_6)$Alkyl und
$R_2$ = Wasserstoff, Acetyl oder Propionyl bedeuten, durch Addition von Verbindungen der Formel II

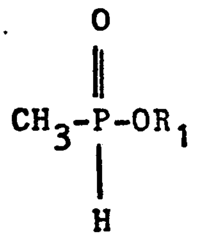 (II) 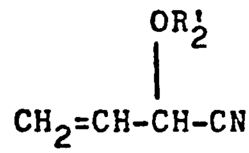

(II, $R_1$ = $(C_1\text{-}C_6)$Alkyl) (III, $R_2'$ = Acetyl oder Propionyl)

an Verbindungen der Formel III unter Verwendung von Radikalbildnern, dadurch gekennzeichnet, daß man als Radikalbildner Verbindungen der allgemeinen Formel IV,

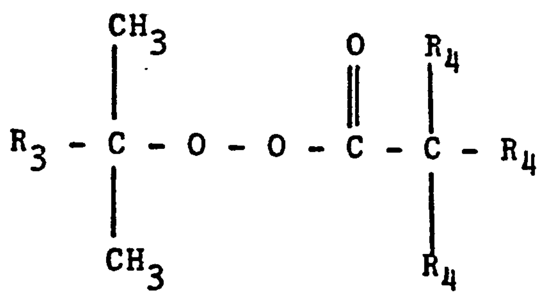

(IV)

worin
$R_3$ = $(C_1\text{-}C_2)$ Alkyl oder Phenyl und
$R_4$ = $(C_1\text{-}C_{10})$ Alkyl bedeuten wobei die Reste $R_4$
gleich oder verschieden sein können,
einsetzt, die Reaktion bei Temperaturen im Bereich von 50 bis 100°C durchführt und zur Herstellung von Verbindungen der Formel I mit $R_2$ = H anschließend den Rest $R_2'$ abspaltet.

2. Verfahren gemäß Anspruch 1, dadurch gekennzeichnet, daß in Formel IV die Reste $R_4$ = $(C_1\text{-}C_6)$Alkyl bedeuten.

3. Verfahren gemäß Ansprüchen 1 und 2 dadurch gekennzeichnet, daß man als Radikalbildner der Formel IV t-Butylperpivalat, tert.-Amylperpivalat, tert.-Butylperneodecanoat, tert.-Amylperneodecanoat, Cumylperneodeocanoat oder ein Gemisch derselben einsetzt.

4. Verfahren gemäß Ansprüchen 1 bis 3, dadurch gekennzeichnet, daß man die Reaktion im Temperaturbereich zwischen 65° und 95° durchführt.

5. Verfahren gemäß Ansprüchen 1 bis 4, dadurch gekennzeichnet, daß man ein Teil der einzusetzenden Menge der Verbindung der Formel IV zusammen mit der Verbindung der Formel (II) vorgibt und anschließend die Verbindung der Formel (III) zusammen mit der Restmenge der Verbindung der Formel IV hinzufügt.

**Claims**

1. A process for the preparation of a compound of the formula (I)

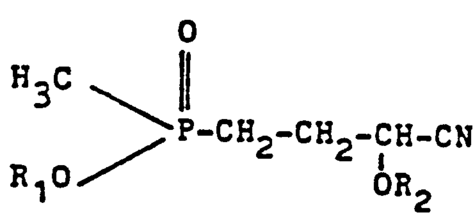

(I)

in which
$R_1$ denotes $(C_1\text{-}C_6)$alkyl, and
$R_2$ denotes hydrogen, acetyl or propionyl, by addition of a compound of the formula II

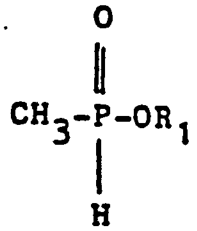

(II)

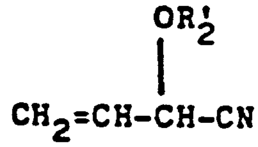

(II, $R_1$ = ($C_1$-$C_6$)alkyl) (III, $R_2'$ = acetyl or propionyl)

onto compounds of the formula III, using radical-formers, which process comprises using, as radical-formers, compounds of the formula IV

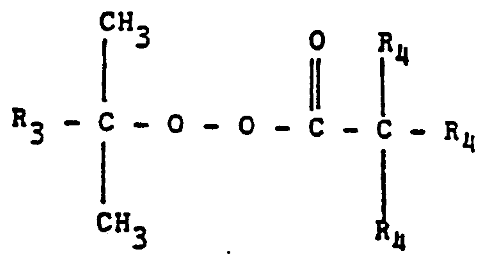

(IV)

in which
$R_3$ denotes ($C_1$-$C_2$)alkyl or phenyl, and
$R_4$ denotes ($C_1$-$C_{10}$)alkyl,
it being possible for the radicals $R_4$ to be identical or different, the reaction being carried out at temperatures in the range from 50 to 100°C, and, for the preparation of a compound of the formula I where $R_2$ is H, then splitting off the radical $R_2'$.

2. The process as claimed in claim 1, wherein the radicals $R_4$ in formula IV denote ($C_1$-$C_6$)alkyl.

3. The process as claimed in claims 1 and 2, wherein t-butyl perpivalate, tert.-amyl perpivalate, tert.-butyl perneodecanoate, tert.-amyl perneodecanoate, cumyl perneodecanoate or a mixture of these are employed as radical-formers of the formula IV.

4. The process as claimed in claims 1 to 3, wherein the reaction is carried out in the temperature range between 65° and 95°.

5. The process as claimed in claims 1 to 4, wherein a portion of the amount of the compound of the formula IV to be employed is initially introduced together with the compound of the formula (II), and then the compound of the formula (III), together with the remaining amount of the compound of the formula IV, is added.

**Revendications**

1. Procédé pour préparer des composés répondant à la formule I:

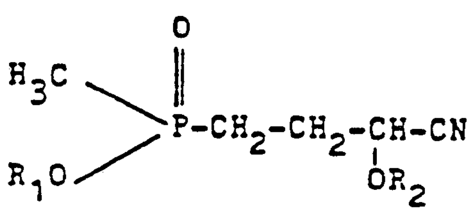

(I)

dans laquelle
$R_1$ représente un radical alkyle en $C_1$-$C_6$ et
$R_2$ représente l'hydrogène ou un radical acétyle ou propionyle,
par fixation de composés de formule II sur des composés de formule III:

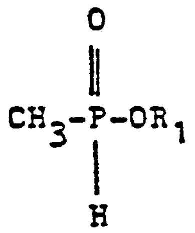

(II)

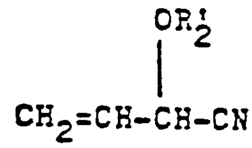

(III)

(où $R_1$ représente un alkyle en $C_1$-$C_6$ et $R'_2$ un acétyle ou un propionyle) au moyen de générateurs de radicaux, procédé caractérisé en ce qu'on utilise, comme générateurs de radicaux, des composés répondant à la formule générale IV:

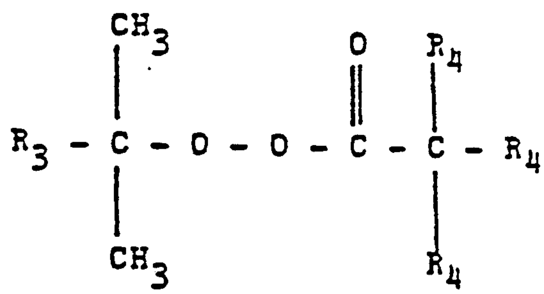

(IV)

dans laquelle $R_3$ représente un alkyle en $C_1$ ou $C_2$ ou un phényle et $R_4$ un alkyle en $C_1$-$C_{10}$, les radicaux $R_4$ pouvant être identiques ou différents,

on effectue la réaction à des températures comprises entre 50 et 100°C et, lorsqu'on veut préparer des composés de formule I dans lesquels $R_2$ représente H, on coupe ensuite le radical $R'_2$.

2. Procédé selon la revendication 1 caractérisé en ce que dans la formule IV, les symboles $R_4$ représentent des alkyles en $C_1$-$C_6$.

3. Procédé selon l'une des revendications 1 et 2, caractérisé en ce qu'on utilise, comme générateur de radicaux de formule IV, le perpivalate de tert-butyle, le perpivalate de tert-pentyle, le pernéodécanoate de tert-butyle, le pernéodécanoate de tert-pentyle, le pernéodécanoate de cumyle ou un mélange de ces composés.

4. Procédé selon l'une quelconque des revendications 1 à 3, caractérisé en ce qu'on effectue la réaction à une température comprise entre 65 et 95°C.

5. Procédé selon l'une quelconque des revendications 1 à 4, caractérisé en ce qu'on place dès le départ dans le récipient réactionnel une partie de la quantité du composé de formule IV à mettre en jeu et le composé de formule II, puis on ajoute le composé de formule III avec la quantité restante du composé de formule IV.